# DEMANDE DE BREVET EUROPEEN

(11) **EP 2 664 243 A1**
(43) Date de publication de la demande: **20.11.2013**
(21) Numéro de dépôt: 12305532.9
(22) Date de dépôt: 14.05.2012
(51) Int. Cl.: A23L 1/076, A61K 36/185, A61K 36/49, A61K 36/66, A61K 36/73

(54) **Utilisation de pollen mono-floral frais pour prévenir et/ou lutter contre la dénutrition**

(71) Demandeur: Pollenergie, 47450 Saint-Hilaire-de-Lusignan (FR)
(72) Inventeur: Percie du Sert, Patrice, 47130 Clermont-Dessous (FR); Cardinault, Nicolas, 47000 Agen (FR)
(74) Mandataire: Cenatiempo, Julie Adeline Anne

(57) **Abrégé**

L'objet de l'invention est l'utilisation d'une composition comprenant du pollen mono-floral frais ou congelé frais comme complément nutritionnel oral humain ou animal pour prévenir la dénutrition et/ou améliorer l'état nutritionnel de personnes dénutries ou d'animaux dénutris.

## Description

La présente invention se rapporte à la lutte contre la dénutrition. En particulier l'invention concerne une composition à base de pollen, son procédé d'obtention et son utilisation comme complément nutritionnel oral pour prévenir et/ou lutter contre la dénutrition des êtres humains.

La dénutrition, ou dénutrition protéino-énergétique, est un état provoqué lorsqu'une personne ne mange plus suffisamment pour couvrir les besoins essentiels de son organisme entraînant une perte de poids mais surtout une perte de masse et de force musculaire qui peut aller jusqu'à l'incapacité à accomplir les actes de la vie quotidienne.

Les causes d'une dénutrition peuvent être nombreuses : dépressions, régimes restrictifs, problèmes dentaires, troubles digestifs, maladies, prises de médicaments ayant une influence sur le goût, etc. Toutefois, la fréquence de la dénutrition protéino-énergétique augmente avec l'âge et le nombre de personnes âgées dénutries en institution ou à l'hôpital ne cessent de croître.

La dénutrition chez la personne âgée favorise entre autres la sarcopénie, l'ostéoporose et la dépression. Elle entraîne des chutes, des fractures, une plus grande vulnérabilité aux maladies aiguës, une aggravation des maladies chroniques et constitue un facteur de morbi-mortalité aggravant.

Une des voies de recherche pour lutter contre cet état de dénutrition est l'apport d'une nutrition adaptée, notamment en administrant des compléments nutritionnels oraux hypercaloriques et/ou hyperprotéinés.

Les compléments nutritionnels actuels associent des éléments à forte densité calorique et des concentrats de protéines, le tout étant mixé pour donner un mélange plus ou moins liquide avec une aromatisation de synthèse.

Toutefois, au-delà des considérations scientifiques théoriques, l'efficacité d'un produit de renutrition tient autant de sa bonne composition nutritionnelle que de la compliance des patients à le consommer selon les recommandations médicales. Or, les produits actuels, issus d'un assemblage d'éléments externes avec un arôme synthétique, ne rencontrent pas l'approbation gustative et organoleptique des patients, si bien que les recommandations de consommations sont mal suivies. Malgré des changements réguliers d'arômes, les patients saturent rapidement et finissent par ne plus vouloir consommer ces produits totalement artificiels, ce qui met leur santé en danger et pose des problèmes au corps médical qui doit trouver des solutions pour faire face à ce refus.

Il subsiste donc un besoin pour un complément nutritionnel oral d'origine naturelle, économique, facile d'utilisation et efficace qui, en association avec une alimentation normale, permet de prévenir et/ou contribuer à la lutte contre la dénutrition, en particulier chez la personne âgée hospitalisée ou en institution. Pour y répondre, la présente invention propose d'utiliser une composition particulière à base de pollen.

Le pollen est connu pour ses nombreuses vertus : anti-inflammatoire, anti-allergique, antioxydante, tonifiante, antibactérienne, etc.

Toutefois les pollens, en fonction de leur état et de leur origine, présentent des caractéristiques différentes.

L'invention vise en particulier l'utilisation d'une composition comprenant au moins un pollen mono-floral frais ou congelé à l'état frais ou un mélange de pollens mono-floraux frais ou congelés à l'état frais, comme complément nutritionnel oral humain ou animal pour prévenir la dénutrition et/ou améliorer l'état nutritionnel de personnes ou animaux dénutris.

L'invention vise donc une composition comprenant au moins un pollen mono-floral frais ou congelé frais ou un mélange de pollen mono-floraux frais ou congelés frais, pour son application comme complément nutritionnel oral humain ou animal ou comme médicament pour prévenir la dénutrition et/ou améliorer l'état nutritionnel de personnes dénutries ou d'animaux dénutris.

Préférentiellement, il s'agit d'une composition comprenant au moins trois pollens mono-floraux, en particulier une composition comprenant au moins trois pollens mono-floraux choisis parmi :
- pollen mono-floral de châtaignier,
- pollen mono-floral de ronce,
- pollen mono-floral de ciste,
- pollen mono-floral de pavot,
- pollen mono-floral d'eucalyptus,
- pollen mono-floral de colza,
- pollen mono-floral de thé,
- pollen mono-floral d'aubépine,
- pollen mono-floral de saule,
- pollen mono-floral de genet,
- pollen mono-floral de bruyère,
- pollen mono-floral de prunus.

Avantageusement, avec ces produits d'origine naturelle présentant de bonnes qualités gustatives et organoleptiques, l'invention permet d'améliorer l'appétence des personnes ou animaux dénutris à le consommer, et par conséquence leurs constantes nutritionnelles, mais également leurs fonctions digestives, musculaires, motrices et cognitives.

L'invention est maintenant décrite en détail.

Selon un premier aspect l'invention vise donc l'utilisation d'une composition comprenant au moins un pollen mono-floral frais ou congelé à l'état frais ou un mélange de pollens mono-floraux frais ou congelés à l'état frais, comme complément nutritionnel oral humain ou animal ou comme médicament pour prévenir la dénutrition et/ou améliorer l'état nutritionnel de personnes dénutries. L'objet de l'invention est donc une composition comprenant au moins un pollen mono-floral frais ou congelé frais ou un mélange de pollen mono-floraux frais ou congelés frais, pour son application comme complément nutritionnel oral humain ou animal ou comme médicament pour prévenir la dénutrition et/ou améliorer l'état nutritionnel de personnes dénutries ou d'animaux dénutris.

Par pollen mono-floral on entend un pollen provenant d'une seule variété de fleur. Le pourcentage de résidus de la ruche et/ou de pollens appartenant à une autre espèce florale est inférieure à 30%, préférentiellement inférieur à 20%.

Par « pollen frais » on entend du pollen récolté qui n'a pas été séché. Par « pollen congelé à l'état frais » ou « congelé frais », on entend du pollen congelé à l'état frais juste après récolte.

Le pollen frais ou congelé frais présente des caractéristiques différentes de celles du pollen séché ou encore d'extraits de pollens qui ont perdu une partie de leurs constituants originels et de leurs effets associés. En outre, la présence de certains constituants comme des enzymes digestives de l'abeille sur les grains de pollen frais, permet de dégrader les hémicelluloses de l'intime (paroi interne du grain de pollen) facilitant de ce fait le phénomène de digestion. La présence de ferments lactiques spécifiques de l'abeille va également en ce sens.

Le pollen ou le mélange de pollens peut être utilisé seul ou en association avec un ou plusieurs autres nutriments.

La composition peut comprendre d'autres éléments nutritionnels, en particulier elle peut comprendre un supplément en acides gras polyinsaturés oméga 3. L'invention est applicable à toutes les personnes ou animaux présentant une dénutrition protéino-énergétique quelle qu'en soit la cause. Elle est particulièrement adaptée pour une utilisation comme complément nutritionnel oral humain pour prévenir et/ou lutter contre la dénutrition des personnes âgées, notamment des personnes âgées hospitalisées ou en institution.

L'apport de pollen frais ou congelé à l'état frais comme complément nutritionnel par voie orale à une personne dénutrie, permet en particulier de lutter contre la sarcopénie, l'ostéoporose, la perte de poids ou autres troubles associés à la dénutrition.

L'invention permet également de stimuler l'appétit des personnes dénutries. Préférentiellement le complément nutritionnel selon l'invention est administré à raison de 30 à 60g par jour, préférentiellement de 40 à 50g. Cette dose quotidienne peut être administrée en une ou deux prises.

Le complément nutritionnel selon l'invention peut être ingéré directement ou bien être mélangé à un yaourt, une compote, un jus de fruit, une boisson ou un liquide avant administration pour une plus grande facilité de prise.

L'effet obtenu avec les pollens mono-floraux frais sur la lutte contre la dénutrition est lié à leur composition complexe et complète, notamment :
- en macronutriments : protéines, glucides et lipides, et
- en micronutriments : vitamines, minéraux, oligo-éléments et phytomicro-constituants tels que les caroténdides, les polyphénols ou les phytostérols par exemple.

De façon préférée, la composition selon l'invention présente au moins une des caractéristiques suivantes pour 100g de produit, préférentiellement toutes :
- énergie : entre 283 et 381 kcal, préférentiellement entre 300 et 350 kcal,
- quantité de protéines : entre 15 et 21g, préférentiellement entre 16 et 19g,
- quantité totale en acides aminés essentiels : entre 4,5 et 6,2g, préférentiellement entre 5 et 6g,
- quantité de lipides : entre 6 et 8g, préférentiellement entre 6,5 et 7,5g,
- ratio oméga 6 / oméga 3 : entre 0,5 et 0,8, préférentiellement entre 0,6 et 0,7,
- quantité en EPA (Acide EicosaPentaéndique) : entre 200 et 400mg, préférentiellement entre 200 et 300mg,
- quantité en DHA (Acide bocosaHexaéndique) : entre 100 et 300mg, préférentiellement entre 110 et 200mg,
- quantité de glucides : entre 46 et 62g, préférentiellement entre 50 et 60g,
- quantité de fibres : entre 11 et 16g, préférentiellement entre 12 et 15g.

Selon un mode de réalisation particulièrement adapté, la composition selon l'invention se présente sous forme d'une poudre grossière constituée de pelotes de pollen indépendantes, moelleuses et d'une texture fondante. Une pelote de pollen est formée à partir d'un agrégat de grains de pollen récoltés par l'abeille et compactés en pelotes sur ses pattes.

Lorsque la composition est supplémentée avec d'autres éléments nutritionnels, en particulier en acides gras polyinsaturés oméga 3, ceux-ci sont préférentiellement microencapsulés et incorporés au mélange.

Selon un deuxième aspect, l'invention propose une composition particulière comprenant un mélange particulier de pollens mono-floraux.

Préférentiellement, il s'agit d'une composition comprenant au moins trois pollens mono-floraux différents, en particulier une composition comprenant au moins trois pollens mono-floraux frais choisis parmi :
- pollen mono-floral de châtaignier
- pollen mono-floral de ronce,
- pollen mono-floral de ciste,
- pollen mono-floral de pavot,
- pollen mono-floral d'eucalyptus,
- pollen mono-floral de colza,
- pollen mono-floral de thé,
- pollen mono-floral d'aubépine,
- pollen mono-floral de saule,
- pollen mono-floral de genet,
- pollen mono-floral de bruyère,
- pollen mono-floral de prunus.

De façon adaptée, il peut s'agir de l'un des exemples donnés en suivant. Exemple 1 :
- pollen mono-floral de châtaignier et/ou de ronce,
- pollen mono-floral de ciste, et
- pollen mono-floral de pavot.

### Exemple 2 :

- pollen mono-floral de châtaignier et/ou de ronce,
- pollen mono-floral de ciste, et
- pollen mono-floral d'aubépine.

### Exemple 3 :

- pollen mono-floral de châtaignier et/ou de ronce,
- pollen mono-floral de ciste, et
- pollen mono-floral d'eucalyptus.

### Exemple 4 :

- pollen mono-floral de saule,
- pollen mono-floral de ciste, et
- pollen mono-floral d'aubépine.

### Exemple 5 :

- pollen mono-floral de saule,
- pollen mono-floral de ciste, et
- pollen mono-floral d'eucalyptus.

### Exemple 6 :

- pollen mono-floral de genet,
- pollen mono-floral de ciste, et
- pollen mono-floral de pavot.

### Exemple 7 :

- pollen mono-floral de genet,
- pollen mono-floral d'eucalyptus, et
- pollen mono-floral d'aubépine.

Ces compositions comprennent un mélange de pollens mono-floraux constitué par 3 ou 4 pollens différents, par exemple pour la composition de l'exemple 1 :
- pollen de châtaignier, de ciste, et de pavot, ou bien
- pollen de ronce, de ciste, et de pavot, ou encore
- pollen de châtaignier, de ronce, de ciste, et de pavot.

Les proportions des différents pollens varient afin d'obtenir préférentiellement une composition présentant les caractéristiques décrites plus avant.

Par exemple, la composition de l'exemple 1 peut comprendre :
- entre 40 et 60% de pollen de châtaignier et/ou de ronce,
- entre 25 et 50% de pollen de ciste, et
- entre 1 et 20% de pollen de pavot.

Les pourcentages sont donnés en poids par rapport au poids total de la composition.

Selon un mode de réalisation adapté, la composition de l'exemple 1 comprend :
- entre 40 et 60% de pollen de châtaignier et/ou de ronce, préférentiellement entre 45 et 50%,
- entre 25 et 50% de pollen de ciste, préférentiellement entre 35 et 40%
- entre 1 et 20% de pollen de pavot, préférentiellement entre 8 et 12%, et
- entre 0,1 et 10% d'acides gras oméga 3, préférentiellement entre 3 et 5%.

Les pourcentages sont donnés en poids par rapport au poids total de la composition.

La composition selon l'invention peut être préparée selon un procédé comprenant les étapes suivantes :
- récolte spécifique de pollens mono-floraux,
- mélange des pollens frais et homogénéisation,
- éventuellement incorporation progressive d'oméga 3 microencaspulés et homogénéisation du mélange, et
- conditionnement.

La récolte des pollens est préférentiellement réalisée selon une méthode qui préserve l'intégrité corporelle des abeilles et qui permet de prélever une partie du pollen récolté par les abeilles sur les fleurs. L'outil de récolte est une « trappe à pollen » constituée d'une grille à travers laquelle les abeilles passent en accrochant une partie des pelotes de pollen fixées sur les pattes arrières et qui tombent à travers un grillage de protection dans un tiroir de récolte. Ce tiroir est récolté tous les 2 à 3 jours maximum en fonction de la climatologie. Cette méthode de récolte permet de garantir l'origine mono-florale, l'absence de résidus de la ruche et la fraîcheur du produit qui garde ainsi toutes ses qualités nutritionnelles.

La microencapsulation des acides gras polyinsaturés oméga 3 est réalisée selon les techniques usuelles, notamment l'atomisation ou la « prilling » ou encore le « coating ». Il est possible d'utiliser des acides gras polyinsaturés oméga 3 microencapsulés du commerce, connus de l'homme du métier.

De façon préférée le conditionnement comprend une étape de congélation du mélange.

Le conditionnement est très préférentiellement réalisé selon la méthode décrite dans le brevet FR-2.719.453. Le mélange est mis sous gaz neutre dans des poches ou barquettes, puis mis sous une cloche à vide, suivie d'une injection de gaz neutre, préférentiellement de l'azote. Les poches sont ensuite refermées ou les barquettes filmées de façon étanche avant réouverture de la cloche à vide. La composition ainsi conditionnée est ensuite congelée entre -18 et -22°C, puis conservée avant utilisation.

Selon une variante le pollen fraîchement récolté peut être congelé avant conditionnement, puis décongelé avant mise en oeuvre du procédé selon l'invention. Il peut être recongelé après conditionnement sans perdre ses propriétés organoleptiques.

La composition selon l'invention peut être conditionnée en barquettes ou sachets de cinq à six doses journalières (doses de 40 à 60g) ou sous forme de doses unitaires. Les doses unitaires peuvent être conditionnées seules par exemple dans un réceptacle suffisant pour recevoir l'équivalent d'un yaourt ou d'une compote (environ 125g) ou bien elles peuvent être directement associées avec du yaourt ou de la compote par exemple sous forme de pots à un ou deux compartiments dont les contenus sont à mélanger avant administration.

La composition selon l'invention peut être utilisée comme complément nutritionnel oral humain ou animal pour prévenir la dénutrition et/ou améliorer l'état nutritionnel de personnes dénutries, en particulier chez les personnes âgées, notamment les personnes âgées hospitalisées ou en institution.

La composition selon l'invention permet un apport d'énergie et de protéines en quantité suffisante pour répondre au besoin accru des personnes dénutries et répondre aux critères régissant les Compléments Nutritionnels Oraux.

La composition selon l'invention est également une source non négligeable de minéraux et oligo-éléments. Elle est riche en potassium et pauvre en sodium et contribue à l'équilibre de la balance électrolytique.

L'utilisation de pollen frais, en particulier de la composition selon l'invention très complète et complexe, en association à une alimentation normale, contribue à couvrir les besoins en macro- et micro-nutriments de la personne dénutrie, notamment de la personne âgée, et contribue à la prévention et/ou la lutte contre la dénutrition.

Avantageusement, le pollen frais, en particulier la composition selon l'invention présente un goût agréable en bouche et stimule l'appétence.

La composition selon l'invention est en outre d'origine naturelle. Son procédé de préparation est simple à mettre en oeuvre et économique.

Selon un autre avantage, la présence d'acides gras polyinsaturés oméga 3, naturellement présents dans le pollen ou ajoutés microencapsulés au mélange de pollens, a un impact positif sur les paramètres anti-inflammatoires, sur les maladies cardiovasculaires et sur le système nerveux.

L'invention peut à présent être illustrée par un exemple non limitatif de fabrication de composition selon l'invention destinée à être utilisée comme complément nutritionnel oral humain ou animal, basé sur un mélange de pollens correspondant à l'exemple 1.

Cette composition peut être obtenue par la mise en oeuvre d'un procédé comprenant les étapes suivantes :
- récolte de pollens mono-floraux de châtaignier et de ronce, de ciste et de pavot,
- mélange de :
   * 48% de pollen de châtaigner et de ronce,
   * 38,5% de pollen de ciste,
   * 9,5% de pollen de pavot,
- homogénéisation,
- incorporation progressive de 4% d'acides gras polyinsaturés oméga 3 microencaspulés (Omegacaps® basic C de chez Polaris),
- homogénéisation du mélange, et
- conditionnement.

Les pourcentages sont données en poids par rapport au poids total de la composition.

Le conditionnement est réalisé comme suit : la composition est mise sous gaz neutre dans des barquettes de 240 à 250g, puis mise sous une cloche à vide. On réalise ensuite une injection de gaz azote jusqu'à rétablir la pression atmosphérique normale. Les barquettes sont ensuite filmées de façon étanche avant réouverture de la cloche à vide. La composition ainsi conditionnée est ensuite congelée entre -18 et -22°C, puis conservée avant utilisation.

La composition ainsi obtenue présente notamment les caractéristiques suivantes :
- énergie pour 100g de produit : 332
- 17,8% de protéines,
- 5,4% d'acides aminés essentiels,
- 7% de lipides,
- un ratio oméga 6 / oméga 3 de 0,65,
- 54,2% de glucides et 13,2% de fibres.

Les pourcentages sont donnés en poids par rapport au poids total de la composition.

Cette composition peut être utilisée comme complément nutritionnel oral humain ou animal, en particulier destinée à être administrée aux personnes souffrant de dénutrition protéino-énergétique. Elle est préférentiellement administrée en doses quotidiennes de 40 à 50g mélangée à un aliment, tel qu'un yaourt, une compote, un jus de fruit, une boisson ou un liquide.

## Revendications

1. Composition comprenant au moins un pollen mono-floral frais ou congelé frais ou un mélange de pollen mono-floraux frais ou congelés frais, pour son application comme complément nutritionnel oral humain ou animal ou comme médicament pour prévenir la dénutrition et/ou améliorer l'état nutritionnel de personnes dénutries ou d'animaux dénutris.

2. Composition selon la revendication 1, pour son application comme complément nutritionnel oral humain ou comme médicament pour prévenir et/ou lutter contre la dénutrition des personnes âgées.

3. Composition selon la revendication 1 ou 2, pour son application comme complément nutritionnel oral humain ou comme médicament pour lutter contre la sarcopénie, l'ostéoporose et la perte de poids.

4. Composition selon l'une des précédentes revendications, pour son application comme complément nutritionnel humain ou comme médicament pour stimuler l'appétit des personnes dénutries.

5. Composition selon l'une des précédentes revendications, pour son application comme complément nutritionnel humain ou comme médicament à raison de 40 à 50g par jour en une ou deux prises.

6. Composition selon l'une des précédentes revendications, pour son application comme complément nutritionnel oral humain ou comme médicament utilisée mélangée à un yaourt, une compote, un jus de fruit, une boisson ou un liquide avant administration.

7. Composition selon l'une des précédentes revendications, **caractérisée en ce qu'**elle comprend au moins trois pollens mono-floraux choisis parmi :
- pollen mono-floral de châtaignier
- pollen mono-floral de ronce,
- pollen mono-floral de ciste,
- pollen mono-floral de pavot,
- pollen mono-floral d'eucalyptus,
- pollen mono-floral de colza,
- pollen mono-floral de thé,
- pollen mono-floral d'aubépine,
- pollen mono-floral de saule,
- pollen mono-floral de genet,
- pollen mono-floral de bruyère,
- pollen mono-floral de prunus.

8. Composition selon l'une des précédentes revendications, **caractérisée en ce qu'**elle comprend également un supplément en acides gras polyinsaturés oméga 3.

9. Composition selon l'une des précédentes revendications, **caractérisée en ce qu'**elle comprend l'un des mélanges suivants :
- pollen mono-floral de châtaignier et/ou de ronce, pollen mono-floral de ciste, et pollen mono-floral de pavot ;
- pollen mono-floral de châtaignier et/ou de ronce, pollen mono-floral de ciste, pollen mono-floral d'aubépine ;
- pollen mono-floral de châtaignier et/ou de ronce, pollen mono-floral de ciste, et pollen mono-floral d'eucalyptus ;
- pollen mono-floral de saule, pollen mono-floral de ciste, et pollen mono-floral d'aubépine ;
- pollen mono-floral de saule, pollen mono-floral de ciste, et pollen mono-floral d'eucalyptus ;
- pollen mono-floral de genet, pollen mono-floral de ciste, et pollen mono-floral de pavot ;
- pollen mono-floral de genet, pollen mono-floral d'eucalyptus, et pollen mono-floral d'aubépine ;

10. Composition selon l'une des précédentes revendications, **caractérisée en ce qu'**elle est constituée par :
- entre 40 et 60% de pollen de châtaignier et/ou de ronce,
- entre 25 et 50% de pollen de ciste,
- entre 1 et 20% de pollen de pavot, et
- entre 0,1 et 10% d'acides gras oméga 3.

11. Composition selon l'une des revendications 8 à 10, **caractérisée en ce que** les acides gras polyinsaturés oméga 3 sont microencapsulés.

12. Composition selon l'une des précédentes revendications, présentant au moins une des caractéristiques suivantes pour 100g de composition :
- énergie : entre 283 et 381 kcal,
- quantité de protéines : entre 15 et 21g,
- quantité totale en acides aminés essentiels : entre 4,5 et 6,2g,
- quantité de lipides : entre 6 et 8g,
- ratio oméga 6 / oméga 3 : entre 0,5 et 0,8,
- quantité en EPA (Acide EicosaPentaéndique) : entre 200 et 400mg,
- quantité en DHA (Acide DocoscHexcéndique) : entre 100 et 300mg,
- quantité de glucides : entre 46 et 62g,
- quantité de fibres : entre 11 et 16g.
